# EUROPEAN PATENT SPECIFICATION

(11) **EP 4 565 811 B1**
(45) Date of publication and mention of the grant of the patent: **25.02.2026**
(21) Application number: 22769357.9
(22) Date of filing: 03.08.2022
(51) Int. Cl.: F17C 5/00, F17C 13/04

(54) **A FUEL CELL SYSTEM HAVING A SECONDARY HYDROGEN STORAGE TANK TO AVOID SHUTTING DOWN THE FUEL CELL SYSTEM DURING REFUELING**
BRENNSTOFFZELLENSYSTEM MIT SEKUNDÄREM WASSERSTOFFSPEICHERTANK ZUR VERMEIDUNG DES HERUNTERFAHRENS DES BRENNSTOFFZELLENSYSTEMS WÄHREND DES TANKENS
SYSTÈME DE PILE À COMBUSTIBLE DOTÉ D'UN RÉSERVOIR DE STOCKAGE D'HYDROGÈNE SECONDAIRE POUR ÉVITER L'ARRÊT DU SYSTÈME DE PILE À COMBUSTIBLE PENDANT LE RAVITAILLEMENT EN CARBURANT

(43) Date of publication of application: 11.06.2025
(73) Proprietor: VOLVO TRUCK CORPORATION, 405 08 Göteborg (SE)
(72) Inventor: ARYA, Pranav, 412 85 Göteborg (SE); SONDEREGGER, Sigurd, 436 37 Askim (SE); BLANC, Ricard, 431 68 Mölndal (SE)
(74) Representative: Zacco Sweden AB
(86) International application number: PCT/IB2022/057207
(87) International publication number: WO 2024/028638

(56) References cited:
- WO-A1-2021/240456
- DE-A1- 102018 209 057
- US-A1- 2006 180 235
- US-A1- 2007 000 016

## Description

### TECHNICAL FIELD

The disclosure relates generally to fuel cell systems. In particular embodiments, the disclosure relates to a fuel cell system having a hydrogen storage tank used to avoid shutting down the fuel cell system during refueling.

The disclosure can be applied in heavy-duty vehicles, such as trucks, buses, and construction equipment. Although the invention will be described with respect to a particular vehicle, the invention is not restricted to any particular vehicle.

### BACKGROUND

As electric vehicle adoption continues to increase, efficient energy storage becomes increasingly valuable. For example, on fuel-cell electric vehicles (FCEVs), there is a need for storing energy in both batteries and onboard hydrogen fuel tanks. A fuel cell must be shut down during refueling of hydrogen. This is not acceptable from a fuel cell lifetime perspective as additional shutdowns will result in faster degradation of the fuel cell system and should be avoided. Additionally, this is also not acceptable from a customer perspective as fuel cell shutdown and start up are time consuming.

As the Hydrogen fill station makes a leak tightness check on the vehicle by lifting the pressure on the vehicle side with a small amount of hydrogen, and then monitor the pressure. If the pressure is stable, the vehicle system is regarded leak tight, and the real filling process starts. The fuel consumption of the fuel cell during the fill process will be translated into leakage, as the pressure is not stable, and this will stop the filling procedure. The document DE 102018209057 Al discloses a hydrogen delivery system.

### SUMMARY

According to some embodiments, a method in continuous hydrogen delivery system having a plurality of primary hydrogen fuel tanks and at least one primary hydrogen fuel tank of the plurality of primary hydrogen fuel tanks acting as a secondary hydrogen fuel tank during refueling to maintain availability of hydrogen to one or more fuel consumers during refueling of a plurality of the plurality of primary hydrogen fuel tanks includes determining whether the plurality of primary hydrogen fuel tanks is set up for refueling. The method includes responsive to determining that that the plurality of primary hydrogen fuel tanks is set up for refueling and before the refueling process begins: disconnecting a plurality of the plurality of primary hydrogen fuel tanks from the primary fuel consumer and the secondary fuel consumer while maintaining a connection of the secondary hydrogen fuel tank to at least one of the primary fuel consumer and the secondary fuel consumer. The method includes after the plurality of primary hydrogen tanks have been refueled: connecting the plurality of the plurality of primary hydrogen fuel tanks and the secondary hydrogen fuel tank to at least one of the primary fuel consumer and the secondary fuel consumer.

According to additional embodiments, a continuous hydrogen delivery system includes a plurality of primary hydrogen fuel tanks configured to provide hydrogen fuel to a primary fuel consumer and a secondary fuel consumer. The continuous hydrogen delivery system includes at least one primary hydrogen fuel tank of the plurality of primary hydrogen fuel tanks configured to act as a secondary hydrogen fuel tank during refueling to maintain availability of hydrogen to one or more fuel consumers during refueling of a plurality of the plurality of primary hydrogen fuel tanks. The continuous hydrogen delivery system includes a first valve connected between the plurality of primary hydrogen fuel tanks and the secondary hydrogen fuel tank. The continuous hydrogen delivery system includes a second valve connected between the plurality of primary hydrogen fuel tanks and the primary fuel consumer. The continuous hydrogen delivery system includes a third valve connected between the plurality of primary hydrogen fuel tanks and the secondary fuel consumer. The continuous hydrogen delivery system includes a controller configured to perform operations including: determining whether the plurality of primary hydrogen fuel tanks is set up for refueling; responsive to determining that the plurality of primary hydrogen fuel tanks is set up for refueling: before the refueling process begins: disconnecting a plurality of the plurality of primary hydrogen fuel tanks from the primary fuel consumer while maintaining a connection of the secondary hydrogen fuel tank to at least one of the primary fuel consumer and the secondary fuel consumer; and after the plurality of primary hydrogen tanks have been refueled: connecting the plurality of the plurality of primary hydrogen fuel tanks (102) and the secondary hydrogen fuel tank to at least one of the primary fuel consumer (102) and the secondary fuel consumer.

According to some further embodiments, a computer program product having a non-transitory storage medium includes program code to be executed by processing circuitry of a controller, whereby execution of the program code causes the controller to perform operations including determining whether a plurality of primary hydrogen fuel tanks is set up for refueling. The operations include responsive to determining that the plurality of primary hydrogen fuel tanks is set up for refueling: before the refueling process begins: disconnecting a plurality of the plurality of primary hydrogen fuel tanks from the primary fuel consumer and the secondary fuel consumer while maintaining a connection of the secondary hydrogen fuel tank to at least one of the primary fuel consumer and the secondary fuel consumer. The operations include after the plurality of primary hydrogen tanks have been refueled: connecting the plurality of the plurality of primary hydrogen fuel tanks and the secondary hydrogen fuel tank to at least one of the primary fuel consumer and the secondary fuel consumer.

According to some further embodiments, a computer program product having a non-transitory storage medium includes program code to be executed by processing circuitry of a controller, whereby execution of the program code causes the controller to perform operations including determining whether a plurality of primary hydrogen fuel tanks is set up for refueling. The operations include responsive to determining that the plurality of primary hydrogen fuel tanks is set up for refueling: before the refueling process begins: disconnecting a plurality of the plurality of primary hydrogen fuel tanks from the primary fuel consumer and the secondary fuel consumer while maintaining a connection of the secondary hydrogen fuel tank to at least one of the primary fuel consumer and the secondary fuel consumer. The operations include after the plurality of primary hydrogen tanks have been refueled: connecting the plurality of the plurality of primary hydrogen fuel tanks and the secondary hydrogen fuel tank to at least one of the primary fuel consumer and the secondary fuel consumer.

In certain examples, the method includes disconnecting the plurality of the plurality of primary hydrogen fuel tanks from the primary fuel consumer by commanding a valve to open.

In certain examples, the method includes transmitting a command to the primary fuel consumer to reducing a hydrogen fuel draw during refueling of the plurality of primary hydrogen fuel tanks

In certain examples, the method includes wherein maintaining the connection of the at least one secondary hydrogen fuel tank to one of the primary fuel consumer and the secondary fuel consumer by maintaining the connection of the at least one secondary hydrogen fuel tank to the secondary fuel consumer.

According to some other embodiments, a method in a continuous hydrogen delivery system having a plurality of primary hydrogen fuel tanks and at least one secondary hydrogen fuel tank to maintain availability of hydrogen to a primary fuel consumer during refueling of at least one of the plurality of primary hydrogen tanks includes determining whether the plurality of primary hydrogen fuel tanks is set up for refueling. The method includes responsive to determining that that the plurality of primary hydrogen fuel tanks is set up for refueling and before the refueling process begins: disconnecting the plurality of primary hydrogen fuel tanks from the primary fuel consumer and connecting the at least one secondary hydrogen fuel tank to the primary fuel consumer, thereby maintaining availability of hydrogen to the primary fuel consumer during refueling of the plurality of primary hydrogen fuel tanks. After the plurality of primary hydrogen tanks have been refueled, the method includes: disconnecting the at least one secondary hydrogen fuel tank from the primary fuel consumer and connecting the plurality of primary hydrogen fuel tanks to the primary fuel consumer.

According to additional embodiments, a continuous hydrogen delivery system includes a plurality of primary hydrogen fuel tanks configured to provide hydrogen fuel to a primary fuel consumer. The continuous hydrogen delivery system includes at least one secondary hydrogen fuel tank configured to provide hydrogen fuel to the primary fuel consumer while the plurality of primary hydrogen tanks is being refueled. The continuous hydrogen delivery system includes a first switchable two port two position valve for connecting and disconnecting the at least one secondary hydrogen fuel tank with the plurality of primary hydrogen fuel tanks. The continuous hydrogen delivery system includes at least one multiple port multiple position valve for connecting and disconnecting the plurality of primary hydrogen fuel tanks and the at least one secondary hydrogen fuel tank to the primary fuel consumer.

According to some further embodiments, a computer program product having a non-transitory storage medium includes program code to be executed by processing circuitry of a controller, whereby execution of the program code causes the controller to perform operations including determining whether a plurality of primary hydrogen fuel tanks is set up for refueling. The operations include responsive to determining that the plurality of primary hydrogen fuel tanks is set up for refueling: before the refueling process begins: disconnecting the plurality of primary hydrogen fuel tanks from a primary fuel consumer and connecting at least one secondary hydrogen fuel tank to the primary fuel consumer, thereby maintaining availability of hydrogen to the primary fuel consumer during refueling of the plurality of primary hydrogen fuel tanks. The operations include after the plurality of primary hydrogen tanks have been refueled: disconnecting the at least one secondary hydrogen fuel tank from the primary fuel consumer and connecting the plurality of primary hydrogen tanks to the primary fuel consumer.

A computer program having program code to be executed by processing circuitry of a controller, whereby execution of the program code causes the controller to perform operations including determining whether a plurality of primary hydrogen fuel tanks is set up for refueling. The operations include responsive to determining that the plurality of primary hydrogen fuel tanks is set up for refueling: before the refueling process begins: disconnecting the plurality of primary hydrogen fuel tanks from a primary fuel consumer and connecting at least one secondary hydrogen fuel tank to the primary fuel consumer, thereby maintaining availability of hydrogen to the primary fuel consumer during refueling of the plurality of primary hydrogen fuel tanks. The operations include after the plurality of primary hydrogen tanks have been refueled: disconnecting the at least one secondary hydrogen fuel tank from the primary fuel consumer and connecting the plurality of primary hydrogen tanks to the primary fuel consumer.

According to an embodiment of the disclosure, a method in a continuous hydrogen delivery system having a plurality of primary hydrogen fuel tanks and at least one secondary hydrogen fuel tank to maintain availability of hydrogen to a primary fuel consumer during refueling of at least one of the plurality of primary hydrogen tanks includes determining whether the plurality of primary hydrogen fuel tanks is set up for refueling. The method further includes responsive to determining that that the plurality of primary hydrogen fuel tanks is set up for refueling and before the refueling process begins: disconnecting the plurality of primary hydrogen fuel tanks from the primary fuel consumer and connecting the at least one secondary hydrogen fuel tank to the primary fuel consumer, thereby maintaining availability of hydrogen to the primary fuel consumer during refueling of the plurality of primary hydrogen fuel tanks. After the plurality of primary hydrogen tanks have been refueled, the method further includes: disconnecting the at least one secondary hydrogen fuel tank from the primary fuel consumer and connecting the plurality of primary hydrogen tanks to the primary fuel consumer.

According to another embodiment, the primary fuel consumer is a fuel cell electric vehicle.

In certain examples, the method includes connecting the at least one secondary hydrogen fuel tank to a secondary fuel consumer during normal operation. The method includes disconnecting the at least one secondary hydrogen fuel tank from the secondary fuel consumer before the refueling process begins. The method includes connecting the at least one secondary hydrogen fuel tank to the secondary fuel consumer after the plurality of primary hydrogen tanks have been refueled.

In certain examples, the method includes connecting the at least one secondary hydrogen fuel tank to a secondary fuel consumer during normal operation. The method includes maintaining the connection to the secondary fuel consumer when the at least one secondary hydrogen fuel tank is connected to the primary fuel consumer.

In certain examples, the secondary fuel consumer is a hydrogen catalytic heater.

In certain examples, the method further includes reducing a power level of the primary fuel consumer during the refueling process to reduce fuel consumption during the refueling process.

In certain examples, the method further includes determining whether the at least one secondary hydrogen fuel tank has to be refueled. The method includes responsive to determining that the at least one secondary hydrogen fuel tank has to be refueled and before the refueling process begins: disconnecting the plurality of primary hydrogen fuel tanks from the primary fuel consumer and disconnecting the at least one secondary hydrogen fuel tank from the primary fuel consumer if connected to the primary fuel consumer or from the secondary fuel consumer if connected to the secondary fuel consumer. The method includes responsive to determining that the at least one secondary hydrogen fuel tank has to be refueled and after the at least one secondary hydrogen fuel tank has been refueled: connecting the plurality of primary hydrogen tanks to the primary fuel consumer and connecting the at least one secondary hydrogen tank to the secondary fuel consumer if the secondary fuel consumer is present.

In certain examples, the method includes sizing the at least one secondary hydrogen fuel tank based on fuel consumption and how long a shutdown of the primary fuel consumer needs to be avoided during refueling of the plurality of primary hydrogen fuel tanks.

According to another embodiment of the disclosure, a continuous hydrogen delivery system includes a plurality of primary hydrogen fuel tanks configured to provide hydrogen fuel to a primary fuel consumer. The continuous hydrogen delivery system includes at least one secondary hydrogen fuel tank configured to provide hydrogen fuel to the primary fuel consumer while the plurality of primary hydrogen tanks is being refueled. The continuous hydrogen delivery system includes a first switchable two port two position valve for connecting and disconnecting the at least one secondary hydrogen fuel tank with the plurality of primary hydrogen fuel tanks. The continuous hydrogen delivery system includes at least one multiple port multiple position valve for connecting and disconnecting the plurality of primary hydrogen fuel tanks and the at least one secondary hydrogen fuel tank to the primary fuel consumer.

In certain examples, the continuous hydrogen delivery system further includes a controller to control the first switchable two port two position valve and the at least one multiple port multiple position valve.

In certain examples, the at least one multiple port multiple position valve comprises a switchable three port two position valve, wherein in a first position of the switchable three port two position valve, the plurality of primary hydrogen fuel tanks is connected to the primary fuel consumer and the at least one secondary hydrogen fuel tank is disconnected from the primary fuel consumer, and wherein in a second position of the switchable three port two position valve, the at least one secondary hydrogen fuel tank is connected to the primary fuel consumer and the plurality of primary hydrogen fuel tanks are disconnected from the primary fuel consumer to enable the plurality of primary hydrogen fuel tanks to be refueled.

In certain examples, the at least one multiple port multiple position valve comprises a switchable four port two position valve, wherein in a first position of the switchable four port two position valve, the plurality of primary hydrogen fuel tanks is connected to the primary fuel consumer and the at least one secondary hydrogen fuel tank is connected to a secondary fuel consumer, and wherein in a second position of the switchable four port two position valve, the at least one secondary hydrogen fuel tank is connected to the primary fuel consumer and the plurality of primary hydrogen fuel tanks is disconnected from the primary fuel consumer and the secondary fuel consumer to enable the plurality of primary hydrogen fuel tanks to be refueled.

In certain examples, the at least one multiple port multiple position valve comprises a switchable four port three position valve, wherein in a first position of the switchable four port three position valve, the plurality of primary hydrogen fuel tanks is connected to the primary fuel consumer and the at least one secondary hydrogen fuel tank is connected to a secondary fuel consumer; wherein in a second position of the switchable four port three position valve, the at least one secondary hydrogen fuel tank is connected to the primary fuel consumer and the plurality of primary hydrogen fuel tanks is disconnected from the primary fuel consumer and the secondary fuel consumer to enable the plurality of primary hydrogen tanks to be refueled, and wherein in a third position of the switchable four port three position valve, the at least one secondary hydrogen fuel tank is connected to the secondary fuel consumer and the plurality of primary hydrogen fuel tanks is disconnected from the primary fuel consumer and the secondary fuel consumer to enable the plurality of primary hydrogen tanks to be refueled.

The at least one multiple port multiple position valve further includes a second switchable two port two position valve wherein when the four port three position valve is in the third position, the second switchable two port two position valve is in a first position to provide hydrogen fuel to the primary fuel consumer via the switchable four port three position valve and the at least one secondary hydrogen fuel tank and when the switchable four port three position valve is in the first position or the second position, the second switchable two port two position valve is in a second position to disconnect the primary fuel consumer from the switchable four port three position valve via the second switchable two port two position valve.

In certain examples, the continuous hydrogen delivery system further includes a second switchable four port two position valve, wherein in a first position, the plurality of primary hydrogen fuel tanks is connected to the at least one multiple port multiple position valve for providing hydrogen fuel to the primary fuel consumer and the at least one secondary fuel tank is connected to the at least one multiple port multiple position valve for providing hydrogen fuel to the secondary fuel consumer and wherein in a second position, the plurality of primary hydrogen fuel tanks and the at least one secondary hydrogen fuel tank are disconnected from the at least one multiple port multiple position valve.

In certain examples, the continuous hydrogen delivery system further includes a first pressure and flow conditioning module positioned between the at least one multiple port multiple position valve and the primary fuel consumer.

In certain examples, the continuous hydrogen delivery system further includes a second pressure and flow conditioning module positioned between the at least one multiple port multiple position valve and the secondary fuel consumer.

In certain examples, the continuous hydrogen delivery system further includes a shut-off valve between the second pressure and flow conditioning module and the at least one multiple port multiple position valve.

In certain examples, the primary fuel consumer is a fuel cell electric vehicle

In certain examples, the secondary fuel consumer is a hydrogen catalytic heater

Additional features and advantages are disclosed in the following description, claims, and drawings, and in part will be readily apparent therefrom to those skilled in the art or recognized by practicing the embodiments as described herein.

### BRIEF DESCRIPTION OF THE DRAWINGS

With reference to the appended drawings, below follows a more detailed description of embodiments of the invention cited as examples.
Figure 1 illustrates a continuous hydrogen delivery system where a plurality of primary hydrogen fuel tanks with at least one primary hydrogen fuel tank designated to operates as a secondary hydrogen fuel tank during refueling are providing hydrogen fuel to a primary fuel consumer and a secondary fuel consumer according to some embodiments;
Figure 2 illustrates the continuous hydrogen delivery system of Fig. 1 where the at least one primary hydrogen fuel tank is operating as a secondary hydrogen fuel tank during refueling of the plurality of primary hydrogen fuel tanks to provide hydrogen fuel to the primary fuel consumer and/or the secondary fuel consumer according to some embodiments;
Figure 3 illustrates the continuous hydrogen delivery system of Figure 2 where the at least one primary hydrogen fuel tank operating as the second hydrogen fuel tank consists of a plurality of primary hydrogen fuel tanks according to some embodiments;
Figure 4 is a schematic diagram of a controller according to one example;
Figure 5 is a flow chart of a method to maintain availability of hydrogen to a primary fuel consumer during refueling of at least one of a plurality of primary hydrogen fuel tanks according to one example;
Figure 6 is a flowchart of a method to reduce hydrogen fuel draw during refueling of the plurality of primary hydrogen tanks according to one example;
Figure 7 illustrates a continuous hydrogen delivery system where primary hydrogen fuel tanks are providing hydrogen fuel to a primary fuel consumer according to one example.
Figure 8 illustrates a continuous hydrogen delivery system where secondary hydrogen fuel tank(s) are providing hydrogen fuel to the primary fuel consumer according to one example.
Figure 9 is a flow chart of a method to maintain availability of hydrogen to a primary fuel consumer during refueling of at least one of a plurality of primary hydrogen fuel tanks according to one example.
Figure 10 illustrates a continuous hydrogen delivery system where primary hydrogen fuel tanks are providing hydrogen fuel to a primary fuel consumer and secondary hydrogen fuel tank(s) are providing hydrogen fuel to a secondary fuel consumer according to one example.
Figure 11 illustrates a continuous hydrogen delivery system where primary hydrogen fuel tanks are disconnected from providing hydrogen fuel to a primary fuel consumer to enable refueling of the primary hydrogen fuel tanks and secondary hydrogen fuel tank(s) are providing hydrogen fuel to the primary fuel consumer during the refueling according to one example.
Figures 12-13 are flow charts illustrating methods to maintain availability of hydrogen to a primary fuel consumer during refueling of at least one of a plurality of primary hydrogen fuel tanks according to examples.
Figure 14 is a flow chart of a method to reduce hydrogen fuel draw from a primary fuel consumer during refueling of the primary hydrogen fuel tanks.
Figure 15 illustrates a continuous hydrogen delivery system where a switchable four port three position valve is in a first position where primary hydrogen fuel tanks provide hydrogen fuel to the primary fuel consumer and secondary hydrogen fuel tanks provide hydrogen fuel to the secondary fuel consumer according to one example.
Figure 16 illustrates a continuous hydrogen delivery system where a switchable four port three position valve is in a second position where primary hydrogen fuel tanks are disconnected from providing hydrogen fuel to the primary fuel consumer and secondary hydrogen fuel tank(s) provide hydrogen fuel to the primary fuel consumer and not the secondary consumer according to one example.
Figure 17 illustrates a continuous hydrogen delivery system where a switchable four port three position valve is in a third position where primary hydrogen fuel tanks are disconnected from providing hydrogen fuel to the primary fuel consumer and secondary hydrogen fuel tanks provide hydrogen fuel to the secondary fuel consumer according to one example.
Figure 18 illustrates the continuous hydrogen delivery system of Figure 11where the switchable four port three position valve is in the third position and a switchable two port two position valve is connected to a port of the third position of the switchable four port three position valve where the secondary hydrogen fuel tank(s) provide hydrogen fuel to the secondary fuel consumer and to the primary fuel consumer via the switchable two port two position valve according to one example.
Figure 19 is a flow chart of a method to refuel the secondary hydrogen fuel tank(s) according to one example.
Figure 20 illustrates a continuous hydrogen delivery system where a switchable four port two position valve is in a first position to provide hydrogen fuel to the primary fuel consumer by the primary hydrogen fuel tanks and provide hydrogen fuel to the secondary fuel consumer by the secondary hydrogen fuel tank(s) according to one example.
Figure 21 illustrates a continuous hydrogen delivery system where a switchable four port two position valve is in a second position where no hydrogen fuel is provided to the primary fuel consumer or the secondary fuel consumer and the secondary hydrogen fuel tank(s) are being refueled according to one example.
Figure 22 is a flow chart of a method to size the secondary hydrogen fuel tank(s) according to one example.

### DETAILED DESCRIPTION

The embodiments set forth below represent the necessary information to enable those skilled in the art to practice the embodiments and illustrate the best mode of practicing the embodiments.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

When a valve (e.g., inline solenoid valve, on-line tank valve, etc.) is open, the input and output of the valve are fluidly connected, and hydrogen fuel can flow through the valve. When a valve is closed, the input and output of the valve are not fluidly connected, and no hydrogen fuel flows through the valve.

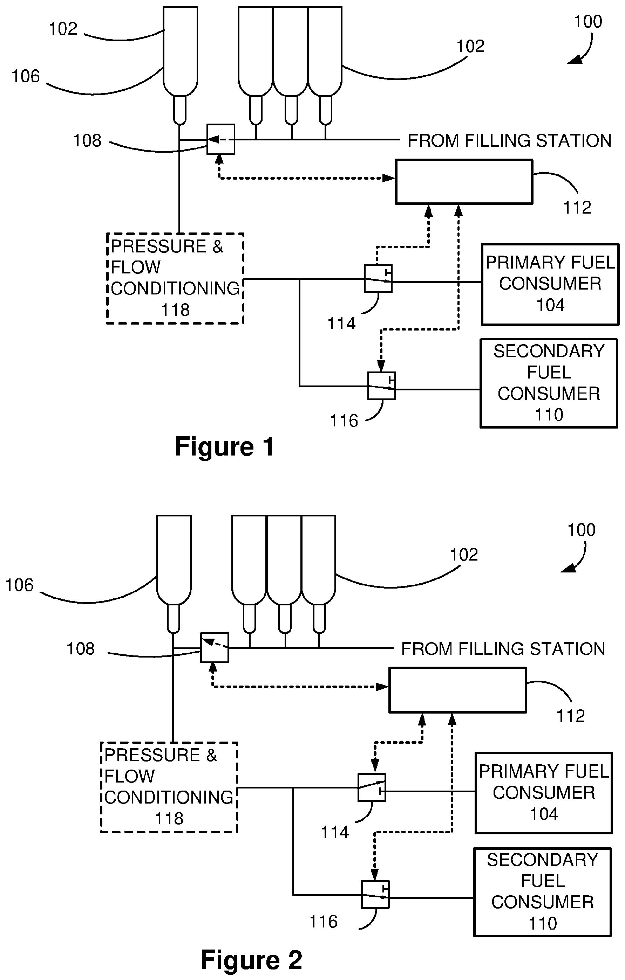

Figure 1 illustrates a continuous hydrogen delivery system 100 having a plurality of primary hydrogen fuel tanks 102 providing fuel to a primary fuel consumer 104. At least one of the primary hydrogen fuel tanks 102 operates as a secondary hydrogen fuel tank 106 during refueling of the plurality of primary hydrogen fuel tanks 102.

The secondary hydrogen fuel tank 106 and the plurality of primary hydrogen fuel tanks 102 collectively provide hydrogen fuel to the primary fuel consumer 104 and the secondary fuel consumer 110. A check valve or a combined check valve and solenoid valve, collectively called CSV 108, is between the plurality of primary hydrogen fuel tanks 102 and the secondary hydrogen fuel tank 106. When the CSV 108 is operating as a check valve, the check valve opens at a defined opening pressure. During normal operation, the CSV 108 is closed and the plurality of primary hydrogen fuel tanks 102 are connected to the secondary hydrogen fuel tank 106.

In these embodiments, an inline solenoid valve is connected to each fuel consumer. For example, inline solenoid valve 114 is connected to primary fuel consumer 104 and inline solenoid valve 116 is connected to the secondary fuel consumer 110. The secondary fuel consumer 110 in some embodiments consists of more than one fuel consumer. During operation, the controller 112 commands the inline solenoid valves 114, 116 to be in a closed position to provide hydrogen fuel to the primary fuel consumer 104 and secondary fuel consumer 110, respectively.. Thus, when inline solenoid valve 114 is in the closed position, hydrogen fuel is provided to the primary fuel consumer 102 as illustrated in Figure 1. When the inline solenoid valve is in the open position, hydrogen fuel is not provided to the primary fuel consumer 102 as illustrated in Figure 2.

During operation, the hydrogen fuel from the plurality of primary hydrogen fuel tanks 102 and the secondary hydrogen fuel tank 106 is provided to the primary fuel consumer 102 and, when the inline solenoid valve 116 is in the closed position, to the secondary fuel consumer 110. The pressure and flow conditioning block 118 can condition the hydrogen fuel pressure and flow.

When the plurality of primary hydrogen fuel tanks 102 need to be filled, the CSV 108 is opened and the inline solenoid valve 114 is opened in some embodiments. This allows the plurality of primary hydrogen fuel tanks 102 to be refueled while the secondary fuel consumer 110 is provided hydrogen fuel. In other embodiments, the controller 112 directs the primary fuel consumer 104 to reduce hydrogen fuel draw during refueling and the inline solenoid valve 114 remains in the closed position during refueling.

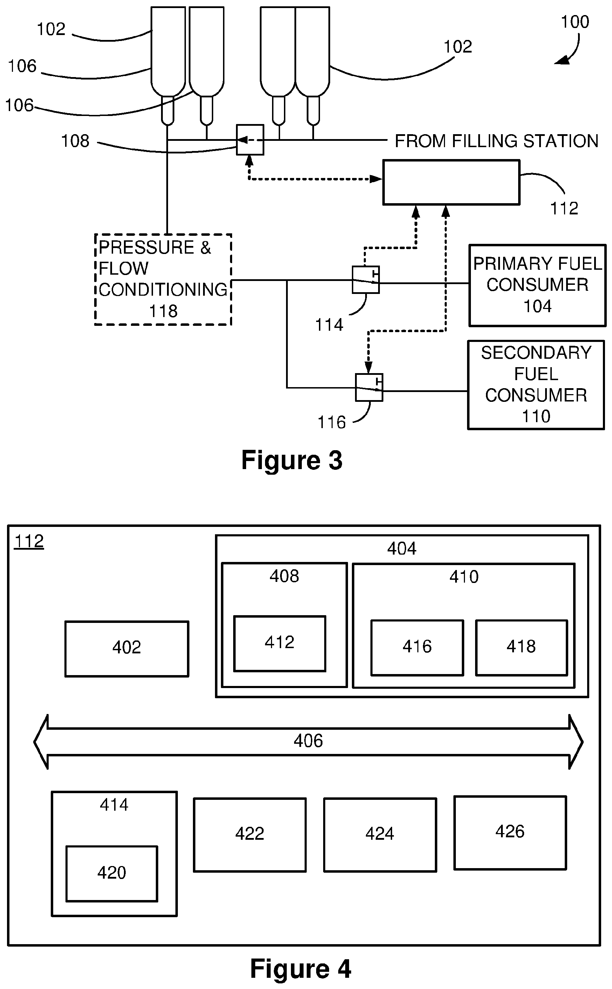

Note that if the at least one secondary hydrogen fuel tank is too small, the CSV 116 can be positioned upstream of additional primary hydrogen fuel tanks 102 as illustrated in Figure 3.

Figure 4 is a schematic diagram of a controller 112 for implementing examples disclosed herein. The controller 112 is adapted to execute instructions from a computer-readable medium to perform these and/or any of the functions or processing described herein. The controller 112 may be connected (e.g., networked) to other machines in a LAN, an intranet, an extranet, or the Internet. While only a single device is illustrated, the controller 112 may include any collection of devices that individually or jointly execute a set (or multiple sets) of instructions to perform any one or more of the methodologies discussed herein.

The controller 112 may comprise any computing or electronic device capable of including firmware, hardware, and/or executing software instructions to implement the functionality described herein. The controller 112 includes a processor device 402 (may also be referred to as a control unit or processing circuitry), a memory 404, and a system bus 406. The system bus 406 provides an interface for system components including, but not limited to, the memory 404 and the processor device 402. The processor device 402 may include any number of hardware components for conducting data or signal processing or for executing computer code stored in memory 404. The processor device 402 (i.e., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 406 may be any of several types of bus structures that may further interconnect to a memory bus (with or without a memory controller), a peripheral bus, and/or a local bus using any of a variety of bus architectures. The memory 404 may be one or more devices for storing data and/or computer code for completing or facilitating methods described herein. The memory 404 may include database components, object code components, script components, or other types of information structure for supporting the various activities herein. Any distributed or local memory device may be utilized with the systems and methods of this description. The memory 404 may be communicably connected to the processor device 402 (e.g., via a circuit or any other wired, wireless, or network connection) and may include computer code for executing one or more processes described herein. The memory 404 may include non-volatile memory 308 (e.g., read-only memory (ROM), erasable programmable read-only memory (EPROM), electrically erasable programmable read-only memory (EEPROM), etc.), and volatile memory 410 (e.g., random-access memory (RAM)), or any other medium which can be used to carry or store desired program code in the form of machine-executable instructions or data structures and which can be accessed by a computer or other machine with a processor device 402. A basic input/output system (BIOS) 412 may be stored in the non-volatile memory 308 and can include the basic routines that help to transfer information between elements within the controller 112.

The controller 112 may further include or be coupled to a non-transitory computer-readable storage medium such as the storage device 414, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 414 and other drives associated with computer-readable media and computer-usable media may provide non-volatile storage of data, data structures, computer-executable instructions, and the like.

A number of modules can be stored in the storage device 414 and in the volatile memory 410, including an operating system 416 and one or more program modules 418, which may implement the functionality described herein in whole or in part. All or a portion of the examples disclosed herein may be implemented as a computer program product 420 stored on a transitory or non-transitory computer-usable or computer-readable storage medium (i.e., single medium or multiple media), such as the storage device 414, which includes complex programming instructions, such as complex computer-readable program code, to cause the processor device 402 to carry out the steps described herein. Thus, the computer-readable program code can comprise software instructions for implementing the functionality of the examples described herein when executed by the processor device 402. The processor device 402 may serve as a controller, or control system, for the controller 112 that is to implement the functionality described herein.

The controller 112 also may include an input device interface 422 (e.g., input device interface and/or output device interface). The input device interface 422 may be configured to receive input and selections to be communicated to the controller 112 when executing instructions, such as from a keyboard, mouse, touch-sensitive surface, etc. Such input devices may be connected to the processor device 402 through the input device interface 422 coupled to the system bus 406 but can be connected through other interfaces such as a parallel port, an Institute of Electrical and Electronic Engineers (IEEE) 1394 serial port, a Universal Serial Bus (USB) port, an IR interface, and the like. The controller 112 may include an output device interface 424 configured to forward output, such as to a display, a video display unit (e.g., a liquid crystal display (LCD) or a cathode ray tube (CRT)). The controller 112 may also include a communications interface 326 suitable for communicating with a network as appropriate or desired.

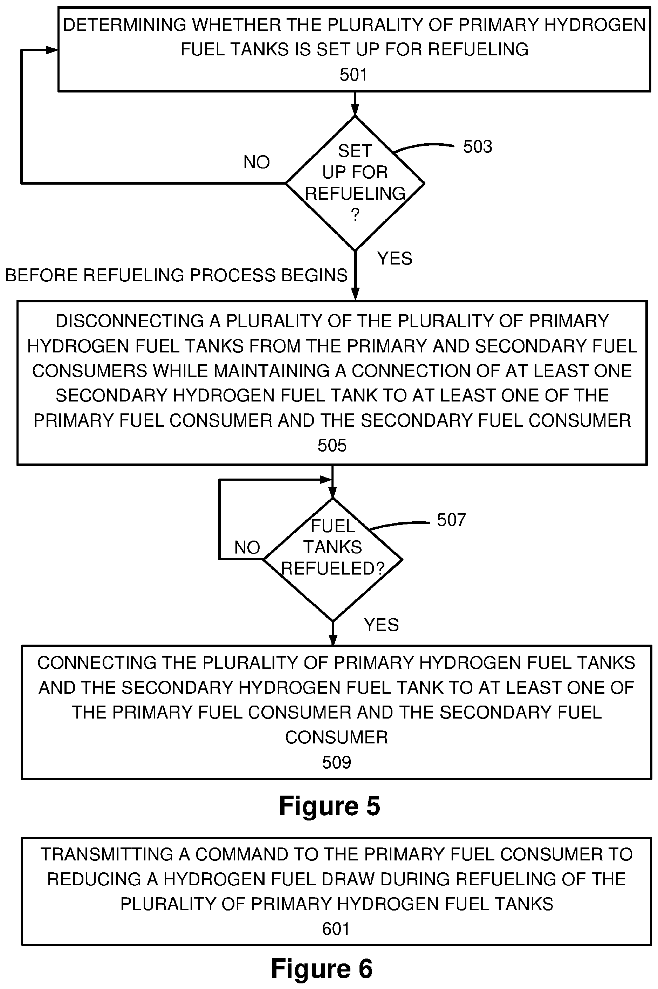

Figure 5 illustrates operations the controller 112 performs in some embodiments such as the embodiments illustrated in Figures 1-3 during a refueling process. Turning to Figure 5, in block 501, the controller 112 determines whether the plurality of primary hydrogen fuel tanks is set up for refueling. When the plurality is set up for refueling and illustrated in block 503 and before the refueling process starts, the controller 112 disconnects a plurality of the plurality of primary hydrogen fuel tanks 102 from the primary fuel consumer while maintaining a connection of the secondary hydrogen fuel tank 106 to at least one of the primary fuel consumer 104 and the secondary fuel consumer 110. In other words, all of the plurality of primary fuel tanks 102 except for the at least one primary hydrogen fuel tank of the plurality of primary hydrogen fuel tanks 102 acting as the secondary hydrogen fuel tank (106) are disconnected for fueling the primary fuel consumer 104 and the secondary fuel consumer 110.

In some embodiments, the controller 112 disconnects the plurality of the plurality of primary hydrogen fuel tanks 102 by commanding the CSV 108 to open. When the controller 112 determines that the plurality of the plurality of primary hydrogen fuel tanks 102 has been refueled, the controller 112 in block 509 connects the plurality of the plurality of primary hydrogen fuel tanks 102 and the secondary hydrogen fuel tank 106 to at least one of the primary fuel consumer 102 and the secondary fuel consumer 110.

In other embodiments, the controller 112 directs the primary fuel consumer 104 to reduce hydrogen fuel draw during refueling and the inline solenoid valve 114 remains in the closed position during refueling. This is illustrated in Figure 6 where in block 601, the controller 112 transmits a command to the primary fuel consumer 102 to reduce a hydrogen fuel draw during refueling of the plurality of primary hydrogen fuel tanks 102.

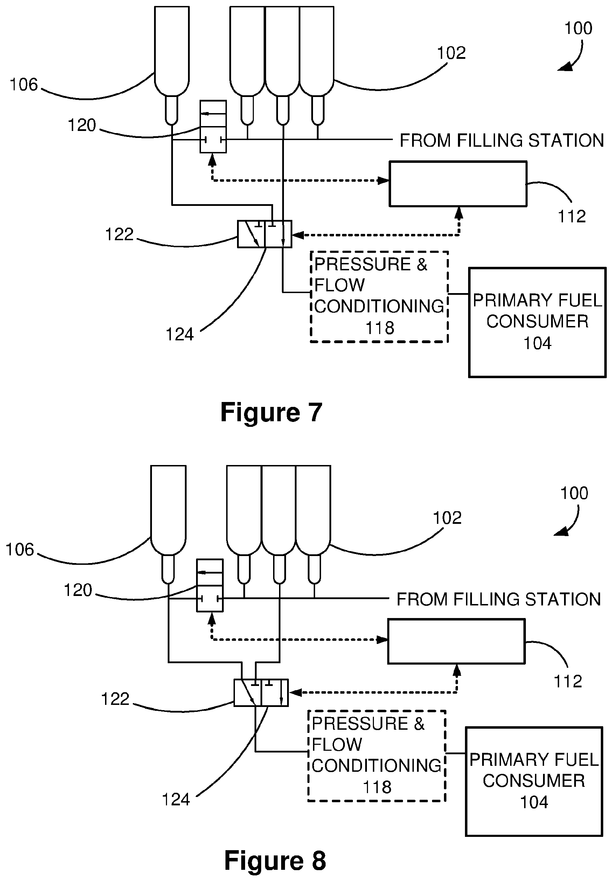

Figure 7 illustrates another embodiment of a continuous hydrogen delivery system 100 where a plurality of primary hydrogen fuel tanks 102 are providing hydrogen fuel to a primary fuel consumer 104 according to one example. In this embodiment, the at least one secondary hydrogen fuel tank 106 is not part of the plurality of primary hydrogen fuel tanks. In other words, the at least one secondary hydrogen fuel tank is separated from the plurality of primary hydrogen fuel tanks 102. In Figure 7, the plurality of primary hydrogen fuel tanks 102 are connected to the at least one secondary hydrogen fuel tank 106 via a switchable two port two position valve 120. In a first position of the switchable two port two position valve 120, the plurality of primary hydrogen fuel tanks 102 are not connected to the at least one secondary hydrogen fuel tank 106. The controller 112 maintains the switchable two port two position valve 120 in the first position during normal operation. When the at least one secondary hydrogen fuel tanks needs to be refueled from the filling station, the controller changes the switchable two port two position valve 120 to be in the second position where the at least one secondary hydrogen fuel tank is connected to the plurality of primary hydrogen fuel tanks 102. The plurality of primary hydrogen fuel tanks 102 and the at least one secondary fuel tank 106 are connected to ports of a multiple port multiple position valve 122. In Figure 1 (and Figure 2), the multiple port multiple position valve 122 is a two port two position valve which will be designated as two port two position valve 124.

Figure 7 shows the two port two position valve 124 being in a first position where the plurality of primary hydrogen fuel tanks is connected to the primary fuel consumer 104 and the at least one secondary hydrogen fuel tank 106 is disconnected.

Figure 8 shows the two port two position valve 124 being in a second position where the plurality of primary hydrogen fuel tanks is disconnected from the primary fuel consumer 104 and the at least one secondary hydrogen fuel tank 106 is connected to the primary fuel consumer 104. This enables the plurality of primary hydrogen fuel tanks to be refueled from a filling station. The pressure and flow conditioning block 118 can condition the hydrogen fuel pressure and flow.

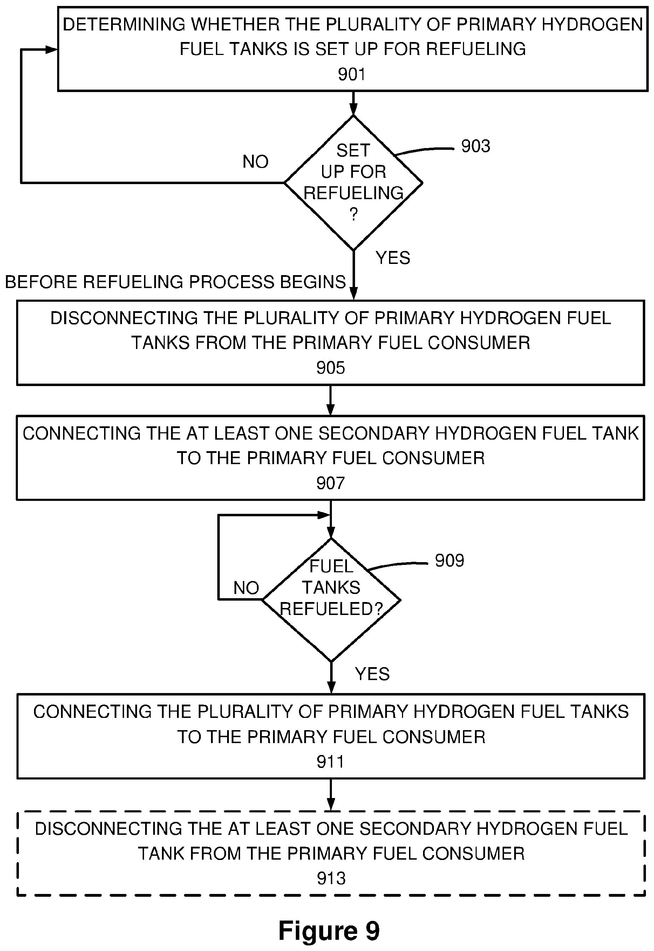

Figure 9 illustrates operations the controller 112 performs in some embodiments such as the embodiments illustrated in Figures 7 and 8. Turning to Figure 9, in block 901, the controller 112 determines whether the plurality of primary hydrogen fuel tanks 102 is set up for refueling. Responsive to determining that the plurality of primary hydrogen fuel tanks 102 is set up for refueling as represented by the yes path of block 903 in Figure 9 and before the refueling process begins, the controller 112 in block 905 disconnects the plurality of primary hydrogen fuel tanks 102 from the primary fuel consumer. For example, as illustrated in Figures 7 and 8, by commanding the two port two position valve 124 to move from the first position to a second position (shown in Figure 8), the plurality of primary hydrogen fuel tanks 102 are disconnected from the primary fuel consumer. In block 907, the controller 112 connects the at least one secondary hydrogen fuel tank to the primary fuel consumer, thereby maintaining availability of hydrogen to the primary fuel consumer during refueling of the plurality of primary hydrogen fuel tanks. As can be seen in Figure 8, by commanding the two port two position valve 124 to move from the first position to a second position, the at least one secondary hydrogen fuel tank 106 becomes connected to the primary fuel consumer. If the plurality of primary hydrogen fuel tanks 102 are not set up for refueling, the controller 112 may periodically check to determine if the plurality of primary hydrogen fuel tanks 102 are set up for refueling. In some embodiments, the controller 112 may receive an indication that the plurality of primary hydrogen fuel tanks 102 are being set up for refueling.

After the plurality of primary hydrogen fuel tanks 102 have been refueled, the controller 112 in block 909 disconnects the at least one secondary hydrogen fuel tank from the primary fuel tank and connects the plurality of primary hydrogen fuel tanks 102 to the primary fuel consumer 104 in block 911. For example, as illustrated in Figures 7and 8, by commanding the two port two position valve 124 to move from the second position to the first position the plurality of primary hydrogen fuel tanks 102 is connected to the primary fuel consumer 104 and in some embodiments as illustrated in block 913, the at least one secondary hydrogen fuel tank 106 is disconnected from the primary fuel consumer.

The primary fuel consumer may be a fuel cell electric vehicle.

In some embodiments, a secondary fuel consumer may be present. For example, the secondary fuel consumer can be a hydrogen catalytic heater.

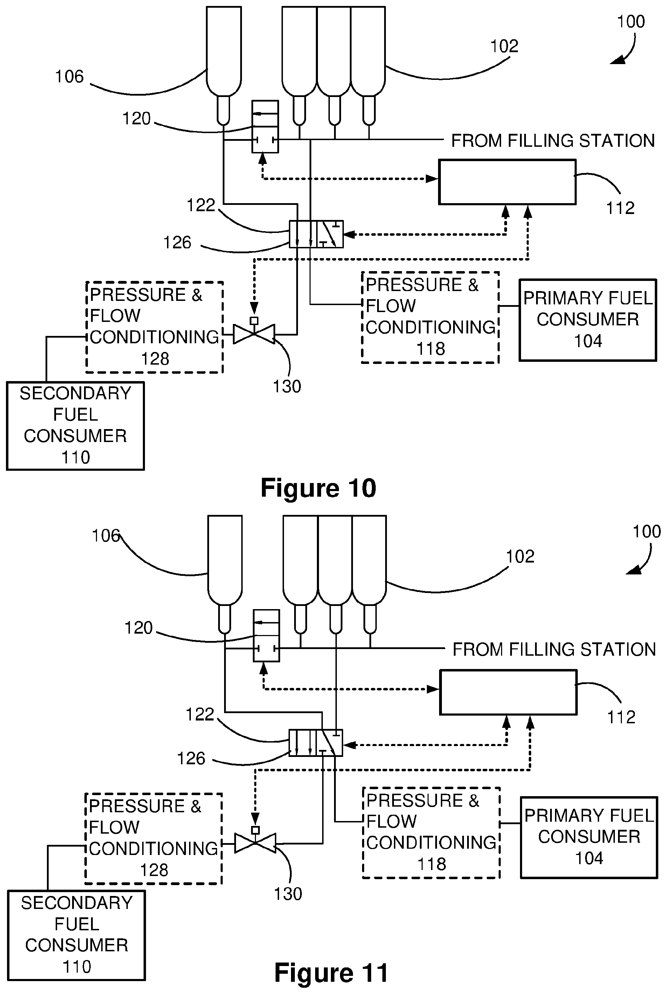

Figure 10 and 11 illustrate embodiments where the multiple port multiple position valve 120 is a three port, two position valve 116. In Figure 10, when the three port, two position valve 126 is in a first position, the plurality of primary hydrogen fuel tanks 102 is connected to the primary fuel consumer 104 and at least one secondary hydrogen fuel tank 106 is connected to the secondary fuel consumer 110. In the flow path to the secondary fuel consumer, a second pressure and flow conditioning block 128 may be present. Additionally, a fuel shut off valve 130 may also be in the flow path that enables the controller 112 to disconnect the secondary fuel consumer 110 from the continuous hydrogen delivery system 100.

In Figure 11, when the three port, two position valve 126 is in a second position, the plurality of primary hydrogen fuel tanks 102 is disconnected from the primary fuel consumer 104 and at least one secondary hydrogen fuel tank 106 is connected to the primary fuel consumer 104 and disconnected from the secondary fuel consumer 110.

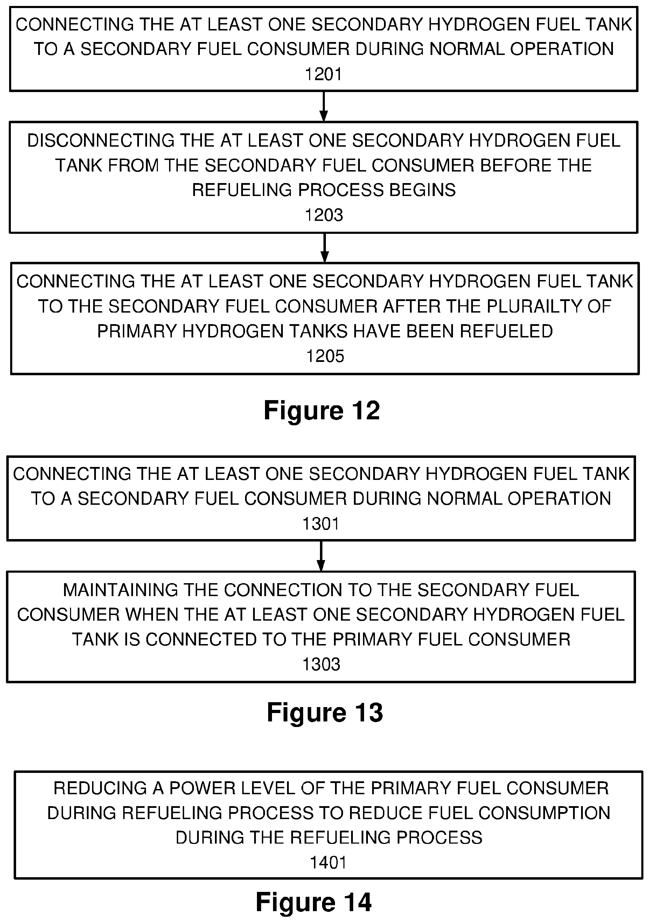

Figure 12 illustrates operations the controller 112 may perform with the embodiments illustrated in Figures 10 and 11. Turning to Figure 12, in block 1201, the controller 112 connects the at least one secondary hydrogen fuel tank 106 to the secondary fuel consumer 110 during normal operation. In block 1203, the controller 112 disconnects the at least one secondary hydrogen fuel tank 106 from the secondary fuel consumer 110 before the refueling process of the plurality of primary hydrogen fuel tanks 102 begins. In block 1205, the controller 112 connects at least one secondary hydrogen fuel tank 106 to the secondary fuel consumer 110 after the plurality of primary hydrogen fuel tanks 102 have been refueled.

There may be scenarios where during normal operation, the plurality of primary hydrogen fuel tanks 102 is connected to the primary fuel consumer and the at least one secondary hydrogen fuel tank 106 is connected to the secondary fuel consumer 110. During the time the plurality of primary hydrogen fuel tanks is being refueled, there may be situations where only the primary fuel consumer 104 is to be supplied hydrogen fuel, where only the secondary fuel consumer 110 is to be suppled hydrogen fuel, or both the primary fuel consumer 104 and the secondary fuel consumer 110 are to be supplied hydrogen fuel.

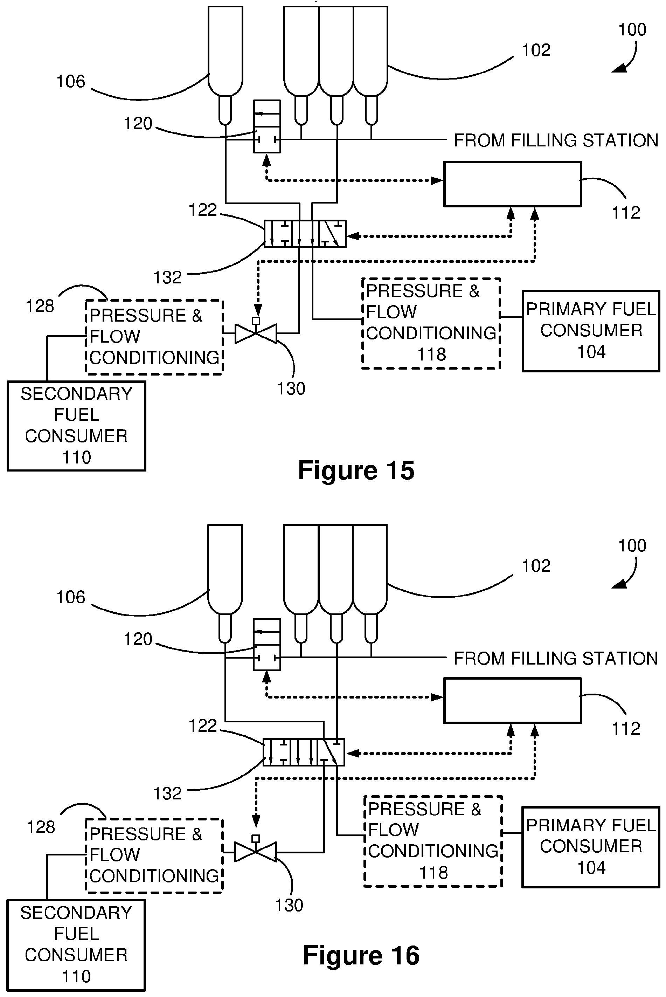

The operations of the controller 112 in the last scenario of both the primary fuel consumer and the secondary fuel consumer are to be supplied hydrogen fuel is illustrated in Figure 13. Turning to Figure 15, in block 1301, the controller 112 connects the at least one secondary hydrogen fuel tank 106 to the secondary fuel consumer 110 during normal operation. In block 1303, the controller 112 maintains the connection of the secondary fuel consumer 110 to the at least one secondary hydrogen fuel tank when the at least one secondary hydrogen fuel tank 106 is connected to the primary fuel consumer 104.

In some embodiments, the power level of the primary fuel consumer is reduced during refueling. This is illustrated in Figure 14. Turning to Figure 14, in block 1401, the controller 112 reduces a power level of the primary fuel consumer 104 during the refueling process to reduce fuel consumption during the refueling process. For example, the controller 112 may transmit a command to the primary fuel consumer 104 to reduce hydrogen fuel draw during refueling of the plurality of primary hydrogen fuel tanks 102.

For the scenarios described above, a four port, three position valve 120 is used for the multiple position multiple valve 110. Figure 15 shows the four port, three position valve 132 in a first position. In the first position, the plurality of primary hydrogen fuel tanks 102 provides hydrogen fuel to the primary fuel consumer 104 and the at least one secondary hydrogen fuel tank 106 provides hydrogen fuel to the secondary fuel consumer 110.

Figure 16 shows the four port, three position valve 132 in a second position. In the second position, the plurality of primary hydrogen fuel tanks 102 is disconnected from the primary fuel consumer 104 and the secondary fuel consumer 110. The at least one secondary hydrogen fuel tank 106 is connected to the primary fuel consumer 104 and provides hydrogen fuel to the primary fuel consumer 104 but does not provide hydrogen fuel to the secondary fuel consumer 110.

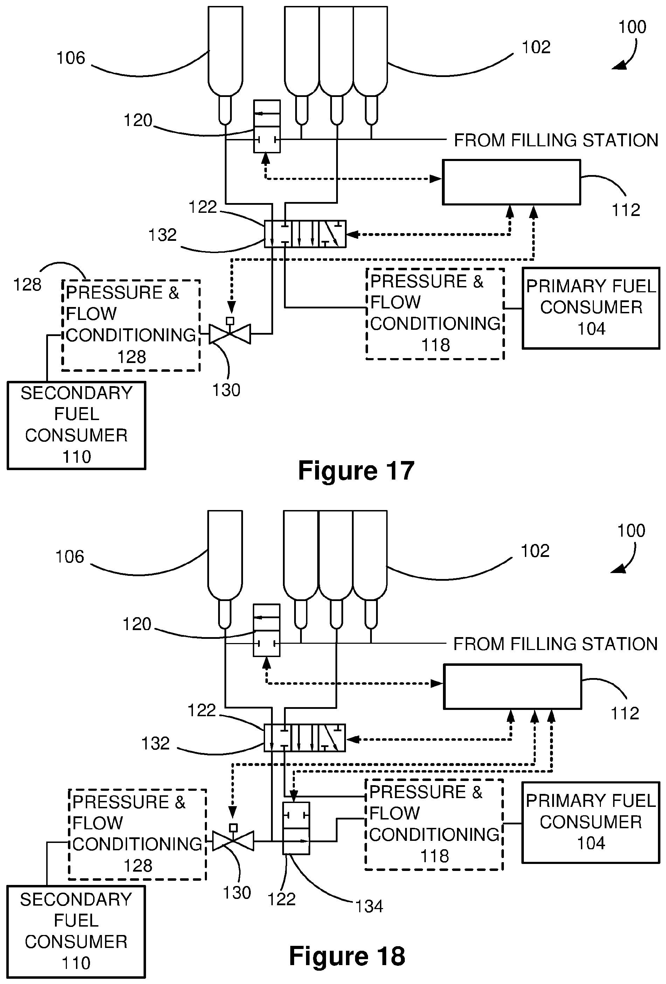

Figure 17 shows the four port, three position valve 132 in a third position. In the third position, the plurality of primary hydrogen fuel tanks 102 is disconnected from the primary fuel consumer 104 and the secondary fuel consumer 110. The at least one secondary hydrogen fuel tank 106 is connected to the secondary fuel consumer 110 but does not provide fuel to the primary fuel consumer 104.

Figure 18 illustrates a second two port two position valve 134 being added to the continuous hydrogen delivery system 100 between the primary fuel consumer and the hydrogen fuel flowing when the four port, three position valve 132 is in the third position. In a first position of the second two port two position valve 134, the primary fuel consumer 104 is disconnected from the hydrogen fuel flowing when the four port, three position valve 132 is in the third position. However, when the second two port two position valve 134 is in a second position as illustrated in Figure 18, the at least one secondary hydrogen fuel tank 106 provides hydrogen fuel to both the primary fuel consumer 104 and the secondary fuel consumer 110.

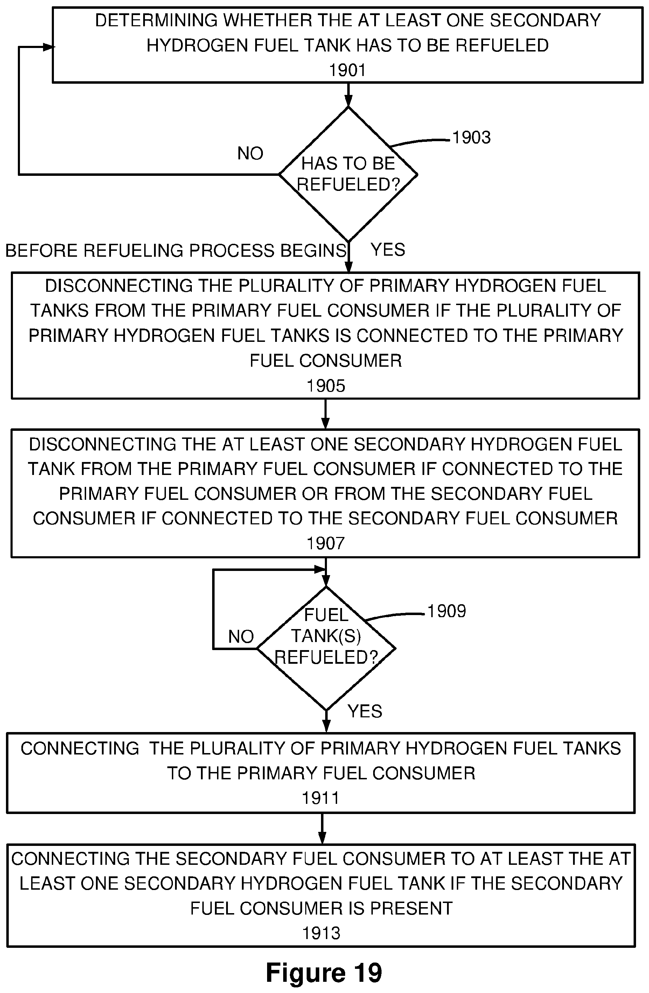

In some embodiments, the at least one secondary hydrogen fuel tank 106 needs to be refueled. The operations the controller 112 performs is illustrated in Figure 19. Turning to Figure 19, in block 1901, the controller 112 determines whether the at least one secondary hydrogen fuel tank 106 has to be refueled. Responsive to determining that the at least one secondary hydrogen fuel tank 106 has to be refueled as represented by the yes path in block 1903 and before the refueling process begins, the controller 112 in block 1905 disconnects the plurality of primary hydrogen fuel tanks 102 from the primary fuel consumer 104 if the plurality of primary hydrogen fuel tanks is connected to the primary fuel consumer. The controller 112 in block 1907 disconnects the at least one secondary hydrogen fuel tank 106 from the primary fuel consumer 104 if connected to the primary fuel consumer 104 or from the secondary fuel consumer 110 if connected to the secondary fuel consumer 110.

The controller check to determine if the at least one secondary hydrogen fuel tank has been refueled in block 1909. Responsive to determining that the at least one secondary hydrogen fuel tank 106 has been refueled as represented by the yes path, the controller 112 in block 1911 connects the plurality of primary hydrogen fuel tanks 102 to the primary fuel consumer 104. In block 1913, the controller 112 connects the secondary fuel consumer 110 to at least the at least one secondary hydrogen fuel tank 106 if the secondary fuel consumer 110 is present.

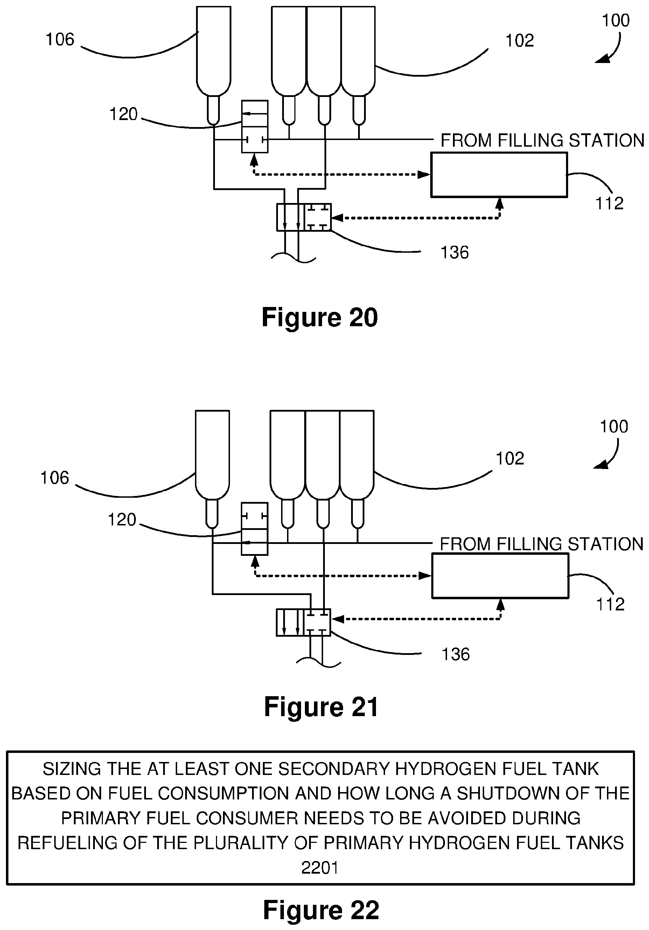

Figures 20 and 21 illustrate a portion of the continuous hydrogen delivery system 100 in refueling the at least one secondary hydrogen fuel tank 106. During normal operation as illustrated in Figure 20, the first two port two position valve 120 is in the first position. The second four port two position valve 136 added to the continuous hydrogen delivery system 100 (and not shown in Figures 7-8, 10-11, and 15-18 for clarity) is in a first position where the plurality of primary hydrogen fuel tanks 102 and the at least one secondary hydrogen fuel tank 106 provide hydrogen fuel to the primary fuel consumer 102 or to the primary fuel consumer 104 and the secondary fuel consumer 110.

Figure 21 illustrates the first two port two position valve 120 being in the second position and the second four port two position valve 136 is in a second position. The first two port two position valve 120 being in the second position connects the at least one secondary hydrogen fuel tank 106 to the plurality of primary hydrogen fuel tanks 102 and the filling station. The second four port two position valve 136 being in the second position disconnects the plurality of primary hydrogen fuel tanks 102 and the at least one secondary hydrogen fuel tank 106 from providing fuel to the primary fuel consumer 104 and the secondary fuel consumer 110. After the at least one secondary hydrogen fuel tank 106 has been refueled, the controller 112 commands the first two port two position valve 120 to move to the first position and the second four port two position valve 136 to move to the first position. The end result is that the first two port two position valve 120 and the second four port two position valve 136 are in the positions shown in Figure 23.

Figure 22 illustrates sizing the at least one secondary hydrogen fuel tank based on fuel consumption. Turning to Figure 22, in block 2201, the at least one secondary hydrogen fuel tank is sized based on fuel consumption and how long a shutdown of the primary fuel consumer needs to be avoided during refueling of the plurality of primary hydrogen fuel tanks.

The operational steps described in any of the exemplary embodiments herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

It is to be understood that the present invention is not limited to the embodiments described above and illustrated in the drawings; rather, the skilled person will recognize that many changes and modifications may be made within the scope of the present disclosure and appended claims.

## Claims

1. A method in a continuous hydrogen delivery system (100) having a plurality of primary hydrogen fuel tanks (102) and at least one primary hydrogen fuel tank of the plurality of primary hydrogen fuel tanks acting as a secondary hydrogen fuel tank (106) during refueling to maintain availability of hydrogen to one or more fuel consumers (104, 110) during refueling of a plurality of the plurality of primary hydrogen fuel tanks, the method performed by a controller and comprising:
determining (501) whether the plurality of primary hydrogen fuel tanks (102) is set up for refueling;
responsive to determining (503) that the plurality of primary hydrogen fuel tanks (102) is set up for refueling:
before the refueling process begins:
disconnecting (505) a plurality of the plurality of primary hydrogen fuel tanks from a primary fuel consumer (104) and a secondary fuel consumer (110) while maintaining a connection of the secondary hydrogen fuel tank (106) to at least one of the primary fuel consumer (104) and the secondary fuel consumer (110); and
after the plurality of primary hydrogen tanks have been refueled (507):
connecting (509) the plurality of the plurality of primary hydrogen fuel tanks (102) and the secondary hydrogen fuel tank (106) to at least one of the primary fuel consumer (102) and the secondary fuel consumer (110).

2. The method of Claim 1 wherein disconnecting the plurality of the plurality of primary hydrogen fuel tanks from the primary fuel consumer (104) comprises commanding a valve (108) to close to prevent hydrogen fuel to flow through the valve.

3. The method of any of Claims 1-2, further comprising transmitting (601) a command to the primary fuel consumer to reducing a hydrogen fuel draw during refueling of the plurality of primary hydrogen fuel tanks.

4. The method of any of Claims 1-3, wherein maintaining the connection of the at least one secondary hydrogen fuel tank (106) to one of the primary fuel consumer (104) and the secondary fuel consumer (110) comprises maintaining the connection of the at least one secondary hydrogen fuel tank (106) to the secondary fuel consumer (110).

5. A continuous hydrogen delivery system (100) comprising:
a plurality of primary hydrogen fuel tanks (102) configured to provide hydrogen fuel to a primary fuel consumer (104) and a secondary fuel consumer (110);
at least one primary hydrogen fuel tank of the plurality of primary hydrogen fuel tanks configured to act as a secondary hydrogen fuel tank (106) during refueling to maintain availability of hydrogen to one or more fuel consumers (104, 110) during refueling of a plurality of the plurality of primary hydrogen fuel tanks;
a first valve (108) connected between the plurality of primary hydrogen fuel tanks and the secondary hydrogen fuel tank (106);
a second valve (114) connected between the plurality of primary hydrogen fuel tanks (102) and the primary fuel consumer (104);
a third valve (116) connected between the plurality of primary hydrogen fuel tanks (102) and the secondary fuel consumer (110); and
a controller (112) configured to perform operations comprising:
determining (501) whether the plurality of primary hydrogen fuel tanks (102) is set up for refueling;
responsive to determining (503) that the plurality of primary hydrogen fuel tanks (102) is set up for refueling:
before the refueling process begins:
disconnecting (505) a plurality of the plurality of primary hydrogen fuel tanks from the primary fuel consumer while maintaining a connection of the secondary hydrogen fuel tank (106) to at least one of the primary fuel consumer (104) and the secondary fuel consumer (110); and
after the plurality of primary hydrogen tanks have been refueled (507):
connecting (509) the plurality of the plurality of primary hydrogen fuel tanks (102) and the secondary hydrogen fuel tank (106) to at least one of the primary fuel consumer (102) and the secondary fuel consumer (110).

6. The continuous hydrogen delivery system (100) of Claim 5 wherein the controller (112) is configured to disconnect the plurality of the plurality of primary hydrogen fuel tanks (102) from the primary fuel consumer (104) by commanding the first valve (108) to open.

7. The continuous hydrogen delivery system (100) of any of Claims 5-6, wherein the controller (112) is further configured to transmit (600) a command to the primary fuel consumer (104) to reduce a hydrogen fuel draw during refueling of the plurality of primary hydrogen fuel tanks (102).

8. The continuous hydrogen delivery system (100) of any of Claims 6-8, wherein the controller (112) is configured to maintain the connection of the at least one secondary hydrogen fuel tank (106) to one of the primary fuel consumer (104) and the secondary fuel consumer (110) by maintaining the connection of the at least one secondary hydrogen fuel tank (106) to the secondary fuel consumer (110).

9. A method in a continuous hydrogen delivery system having a plurality of primary hydrogen fuel tanks and at least one secondary hydrogen fuel tank to maintain availability of hydrogen to a primary fuel consumer during refueling of at least one of the plurality of primary hydrogen fuel tanks, the method performed by a controller and comprising:
determining (901) whether the plurality of primary hydrogen fuel tanks is set up for refueling;
responsive to determining (903) that the plurality of primary hydrogen fuel tanks is set up for refueling:
before the refueling process begins:
disconnecting (905) the plurality of primary hydrogen fuel tanks from the primary fuel consumer; and
connecting (907) the at least one secondary hydrogen fuel tank to the primary fuel consumer, thereby maintaining availability of hydrogen to the primary fuel consumer during refueling of the plurality of primary hydrogen fuel tanks; and
after the plurality of primary hydrogen tanks have been refueled (909):
connecting (911) the plurality of primary hydrogen fuel tanks to the primary fuel consumer.

10. The method of Claim 9 further comprising disconnecting (913) the at least one secondary hydrogen fuel tank from the primary fuel consumer after the plurality of primary hydrogen tanks have been refueled.

11. The method of any of Claims 9-10 wherein the primary fuel consumer comprises a fuel cell electric vehicle.

12. The method of any of Claims 9-11, further comprising:
connecting (1201) the at least one secondary hydrogen fuel tank to a secondary fuel consumer during normal operation;
disconnecting (1203) the at least one secondary hydrogen fuel tank from the secondary fuel consumer before the refueling process begins; and
connecting (1205) the at least one secondary hydrogen fuel tank to the secondary fuel consumer after the plurality of primary hydrogen tanks have been refueled.

13. The method of any of Claims 9-12, further comprising:
connecting (1301) the at least one secondary hydrogen fuel tank to a secondary fuel consumer during normal operation; and
maintaining (1303) the connection to the secondary fuel consumer when the at least one secondary hydrogen fuel tank is connected to the primary fuel consumer.

14. The method of any of Claims 9-13 wherein the secondary fuel consumer comprises a hydrogen catalytic heater.

15. The method of any of Claims 9-14, further comprising
reducing (1401) a power level of the primary fuel consumer during the refueling process to reduce fuel consumption during the refueling process.

## Patentansprüche

1. Verfahren in einem System (100) zur kontinuierlichen Wasserstoffzufuhr mit einer Mehrzahl von primären Wasserstoffkraftstofftanks (102) und wobei mindestens ein primärer Wasserstoffkraftstofftank der Mehrzahl von primären Wasserstoffkraftstofftanks während des Betankens als sekundärer Wasserstoffkraftstofftank (106) fungiert, um die Verfügbarkeit von Wasserstoff für einen oder mehrere Kraftstoffverbraucher (104, 110) während des Betankens einer Mehrzahl der Mehrzahl von primären Wasserstoffkraftstofftanks aufrechtzuerhalten, wobei das Verfahren von einer Steuerung ausgeführt wird und umfasst:
Ermitteln (501), ob die Mehrzahl von primären Wasserstoffkraftstofftanks (102) für das Betanken eingerichtet ist;
als Reaktion auf das Ermitteln (503), dass die Mehrzahl von primären Wasserstoffkraftstofftanks (102) für das Betanken eingerichtet ist:
bevor der Betankvorgang beginnt:
Trennen (505) einer Mehrzahl der Mehrzahl von primären Wasserstoffkraftstofftanks von einem primären Kraftstoffverbraucher (104) und einem sekundären Kraftstoffverbraucher (110), während eine Verbindung des sekundären Wasserstoffkraftstofftanks (106) mit mindestens einem des primären Kraftstoffverbrauchers (104) und des sekundären Kraftstoffverbrauchers (110) aufrechterhalten wird;
und nach dem Betanken (507) der Mehrzahl von primären Wasserstoffkraftstofftanks:
Verbinden (509) der Mehrzahl der Mehrzahl von primären Wasserstoffkraftstofftanks (102) und des sekundären Wasserstoffkraftstofftanks (106) mit mindestens einem des primären Kraftstoffverbrauchers (102) und des sekundären Kraftstoffverbrauchers (110).

2. Verfahren nach Anspruch 1, wobei das Trennen der Mehrzahl der Mehrzahl von primären Wasserstoffkraftstofftanks von dem primären Kraftstoffverbraucher (104) das Anweisen eines Ventils (108) zum Schließen umfasst, um ein Fließen von Wasserstoffkraftstoff durch das Ventil zu verhindern.

3. Verfahren nach einem der Ansprüche 1 bis 2, das ferner das Übermitteln (601) eines Befehls an den primären Kraftstoffverbraucher zur Verringerung einer Wasserstoffkraftstoffentnahme beim Betanken der Mehrzahl von primären Wasserstoffkraftstofftanks umfasst.

4. Verfahren nach einem der Ansprüche 1 bis 3, wobei das Aufrechterhalten der Verbindung des mindestens einen sekundären Wasserstoffkraftstofftanks (106) mit einem des primären Kraftstoffverbrauchers (104) und des sekundären Kraftstoffverbrauchers (110) das Aufrechterhalten der Verbindung des mindestens einen sekundären Wasserstoffkraftstofftanks (106) mit dem sekundären Kraftstoffverbraucher (110) umfasst.

5. System (100) zur kontinuierlichen Wasserstoffzufuhr, das umfasst:
eine Mehrzahl von primären Wasserstoffkraftstofftanks (102), die dazu konfiguriert sind, Wasserstoffkraftstoff an einen primären Kraftstoffverbraucher (104) und einen sekundären Kraftstoffverbraucher (110) bereitzustellen;
mindestens einen primären Wasserstoffkraftstofftank der Mehrzahl von primären Wasserstoffkraftstofftanks, der dazu konfiguriert ist, während des Betankens als sekundärer Wasserstoffkraftstofftank (106) zu fungieren, um die Verfügbarkeit von Wasserstoff für einen oder mehrere Kraftstoffverbraucher (104, 110) während des Betankens einer Mehrzahl der Mehrzahl von primären Wasserstoffkraftstofftanks aufrechtzuerhalten;
ein erstes Ventil (108), das zwischen der Mehrzahl von primären Wasserstoffkraftstofftanks und dem sekundären Wasserstoffkraftstofftank (106) verbunden ist;
ein zweites Ventil (114), das zwischen der Mehrzahl von primären Wasserstoffkraftstofftanks (102) und dem primären Kraftstoffverbraucher (104) verbunden ist;
ein drittes Ventil (116), das zwischen der Mehrzahl von primären Wasserstoffkraftstofftanks (102) und dem sekundären Kraftstoffverbraucher (110) verbunden ist; und
eine Steuerung (112), die dazu konfiguriert ist, Vorgänge durchzuführen, die umfassen:
Ermitteln (501), ob die Mehrzahl von primären Wasserstoffkraftstofftanks (102) für das Betanken eingerichtet ist;
als Reaktion auf das Ermitteln (503), dass die Mehrzahl von primären Wasserstoffkraftstofftanks (102) für das Betanken eingerichtet ist:
bevor der Betankvorgang beginnt:
Trennen (505) einer Mehrzahl der Mehrzahl von primären Wasserstoffkraftstofftanks von dem primären Kraftstoffverbraucher, während eine Verbindung des sekundären Wasserstoffkraftstofftanks (106) mit mindestens einem des primären Kraftstoffverbrauchers (104) und des sekundären Kraftstoffverbrauchers (110) aufrechterhalten wird; und
nach dem Betanken der Mehrzahl von primären Wasserstoffkraftstofftanks (507):
Verbinden (509) der Mehrzahl der Mehrzahl von primären Wasserstoffkraftstofftanks (102) und des sekundären Wasserstoffkraftstofftanks (106) mit mindestens einem des primären Kraftstoffverbrauchers (102) und des sekundären Kraftstoffverbrauchers (110).

6. System (100) zur kontinuierlichen Wasserstoffzufuhr nach Anspruch 5, wobei die Steuerung (112) dazu konfiguriert ist, die Mehrzahl der Mehrzahl von primären Wasserstoffkraftstofftanks (102) von dem primären Kraftstoffverbraucher (104) zu trennen, indem das erste Ventil (108) angewiesen wird, sich zu öffnen.

7. System (100) zur kontinuierlichen Wasserstoffzufuhr nach einem der Ansprüche 5 bis 6, wobei die Steuerung (112) ferner dazu konfiguriert ist, einen Befehl an den primären Kraftstoffverbraucher (104) zur Verringerung einer Wasserstoffkraftstoffentnahme beim Betanken der Mehrzahl von primären Wasserstoffkraftstofftanks (102) zu übermitteln (600).

8. System (100) zur kontinuierlichen Wasserstoffzufuhr nach einem der Ansprüche 6 bis 8, wobei die Steuerung (112) dazu konfiguriert ist, die Verbindung des mindestens einen sekundären Wasserstoffkraftstofftanks (106) mit einem des primären Kraftstoffverbrauchers (104) und des sekundären Kraftstoffverbrauchers (110) aufrechtzuerhalten, indem die Verbindung des mindestens einen sekundären Wasserstoffkraftstofftanks (106) mit dem sekundären Kraftstoffverbraucher (110) aufrechterhalten wird.

9. Verfahren in einem System zur kontinuierlichen Wasserstoffzufuhr mit einer Mehrzahl von primären Wasserstoffkraftstofftanks und mindestens einem sekundären Wasserstoffkraftstofftank, um die Verfügbarkeit von Wasserstoff für einen primären Kraftstoffverbraucher während des Betankens von mindestens einem der Mehrzahl von primären Wasserstoffkraftstofftanks aufrechtzuerhalten, wobei das Verfahren von einer Steuerung ausgeführt wird und umfasst:
Ermitteln (901), ob die Mehrzahl von primären Wasserstoffkraftstofftanks für das Betanken eingerichtet ist;
als Reaktion auf das Ermitteln (903), dass die Mehrzahl von primären Wasserstoffkraftstofftanks für das Betanken eingerichtet ist:
bevor der Betankvorgang beginnt:
Trennen (905) der Mehrzahl von primären Wasserstoffkraftstofftanks von dem primären Kraftstoffverbraucher; und
Verbinden (907) des mindestens einen sekundären Wasserstoffkraftstofftanks mit dem primären Kraftstoffverbraucher, wodurch die Verfügbarkeit von Wasserstoff für den primären Kraftstoffverbraucher während des Betankens der Mehrzahl von primären Wasserstoffkraftstofftanks aufrechterhalten wird; und nach dem Betanken der Mehrzahl von primären Wasserstoffkraftstofftanks (909):
Verbinden (911) der Mehrzahl von primären Wasserstoffkraftstofftanks mit dem primären Kraftstoffverbraucher.

10. Verfahren nach Anspruch 9, das ferner das Trennen (913) des mindestens einen sekundären Wasserstoffkraftstofftanks von dem primären Kraftstoffverbraucher umfasst, nachdem die Mehrzahl von primären Wasserstofftanks betankt wurde.

11. Verfahren nach einem der Ansprüche 9 bis 10, wobei der primäre Kraftstoffverbraucher ein Elektro-Brennstoffzellenfahrzeug umfasst.

12. Verfahren nach einem der Ansprüche 9 bis 11, das ferner umfasst:
Verbinden (1201) des mindestens einen sekundären Wasserstoffkraftstofftanks mit einem sekundären Kraftstoffverbraucher während eines normalen Betriebs;
Trennen (1203) des mindestens einen sekundären Wasserstoffkraftstofftanks von dem sekundären Kraftstoffverbraucher, bevor der Betankvorgang beginnt; und
Verbinden (1205) des mindestens einen sekundären Wasserstoffkraftstofftanks mit dem sekundären Kraftstoffverbraucher, nachdem die Mehrzahl von primären Wasserstofftanks betankt wurde.

13. Verfahren nach einem der Ansprüche 9 bis 12, das ferner umfasst:
Verbinden (1301) des mindestens einen sekundären Wasserstoffkraftstofftanks mit einem sekundären Kraftstoffverbraucher während eines normalen Betriebs; und
Aufrechterhalten (1303) der Verbindung mit dem sekundären Kraftstoffverbraucher, wenn der mindestens eine sekundäre Wasserstoffkraftstofftank mit dem primären Kraftstoffverbraucher verbunden ist.

14. Verfahren nach einem der Ansprüche 9 bis 13, wobei der primäre Kraftstoffverbraucher eine katalytische Wasserstoffheizung umfasst.

15. Verfahren nach einem der Ansprüche 9 bis 14, das ferner umfasst:
Verringern (1401) einer Leistungshöhe des primären Kraftstoffverbrauchers während des Betankvorgangs, um den Kraftstoffverbrauch während des Betankvorgangs zu verringern.

## Revendications

1. Procédé dans un système de distribution d'hydrogène continu (100) ayant une pluralité de réservoirs de carburant à hydrogène primaires (102) et au moins un réservoir de carburant à hydrogène primaire de la pluralité de réservoirs de carburant à hydrogène primaires agissant comme un réservoir de carburant à hydrogène secondaire (106) pendant le ravitaillement pour maintenir la disponibilité de l'hydrogène pour un ou plusieurs consommateurs de carburant (104, 110) pendant le ravitaillement d'une pluralité desdits réservoirs de carburant à hydrogène primaires, le procédé étant effectué par un dispositif de commande et comprenant :
la détermination (501) si la pluralité de réservoirs de carburant à hydrogène primaires (102) est configurée pour le ravitaillement ;
en réponse à la détermination (503) que la pluralité de réservoirs de carburant à hydrogène primaires (102) est configurée pour le ravitaillement :
avant que le processus de ravitaillement ne commence :
la déconnexion (505) d'une pluralité desdits réservoirs de carburant à hydrogène primaires d'un consommateur de carburant primaire (104) et d'un consommateur de carburant secondaire (110) tout en maintenant une connexion du réservoir de carburant à hydrogène secondaire (106) à au moins un parmi le consommateur de carburant primaire (104) et le consommateur de carburant secondaire (110) ; et
après que la pluralité desdits réservoirs d'hydrogène primaires a été ravitaillée (507) :
la connexion (509) de la pluralité desdits réservoirs de carburant à hydrogène primaires (102) et du réservoir de carburant à hydrogène secondaire (106) à au moins un parmi le consommateur de carburant primaire (102) et le consommateur de carburant secondaire (110).

2. Procédé selon la revendication 1, dans lequel la déconnexion de la pluralité desdits réservoirs de carburant à hydrogène primaires du consommateur de carburant primaire (104) comprend la commande d'une vanne (108) pour se fermer afin d'empêcher le carburant à hydrogène de s'écouler à travers la vanne.

3. Procédé selon l'une quelconque des revendications 1 à 2, comprenant en outre la transmission (601) d'une commande au consommateur de carburant primaire pour réduire un prélèvement de carburant à hydrogène pendant le ravitaillement de la pluralité de réservoirs de carburant à hydrogène primaires.

4. Procédé selon l'une quelconque des revendications 1 à 3, dans lequel le maintien de la connexion de l'au moins un réservoir de carburant à hydrogène secondaire (106) à un parmi le consommateur de carburant primaire (104) et le consommateur de carburant secondaire (110) comprend le maintien de la connexion de l'au moins un réservoir de carburant à hydrogène secondaire (106) au consommateur de carburant secondaire (110).

5. Système de distribution d'hydrogène continu (100) comprenant :
une pluralité de réservoirs de carburant à hydrogène primaires (102) configurée pour fournir du carburant à hydrogène à un consommateur de carburant primaire (104) et à un consommateur de carburant secondaire (110) ;
au moins un réservoir de carburant à hydrogène primaire de la pluralité de réservoirs de carburant à hydrogène primaires configuré pour agir comme un réservoir de carburant à hydrogène secondaire (106) pendant le ravitaillement pour maintenir la disponibilité de l'hydrogène pour un ou plusieurs consommateurs de carburant (104, 110) pendant le ravitaillement d'une pluralité desdits réservoirs de carburant à hydrogène primaires ;
une première vanne (108) connectée entre la pluralité de réservoirs de carburant à hydrogène primaires et le réservoir de carburant à hydrogène secondaire (106) ;
une deuxième vanne (114) connectée entre la pluralité de réservoirs de carburant à hydrogène primaires (102) et le consommateur de carburant primaire (104) ;
une troisième vanne (116) connectée entre la pluralité de réservoirs de carburant à hydrogène primaires (102) et le consommateur de carburant secondaire (110) ; et
un dispositif de commande (112) configuré pour effectuer des opérations comprenant :
la détermination (501) si la pluralité de réservoirs de carburant à hydrogène primaires (102) est configurée pour le ravitaillement ;
en réponse à la détermination (503) que la pluralité de réservoirs de carburant à hydrogène primaires (102) est configurée pour le ravitaillement :
avant que le processus de ravitaillement ne commence :
la déconnexion (505) d'une pluralité desdits réservoirs de carburant à hydrogène primaires du consommateur de carburant primaire tout en maintenant une connexion du réservoir de carburant à hydrogène secondaire (106) à au moins un parmi le consommateur de carburant primaire (104) et le consommateur de carburant secondaire (110) ; et
après que la pluralité desdits réservoirs d'hydrogène primaires a été ravitaillée (507) :
la connexion (509) de la pluralité desdits réservoirs de carburant à hydrogène primaires (102) et du réservoir de carburant à hydrogène secondaire (106) à au moins un parmi le consommateur de carburant primaire (102) et le consommateur de carburant secondaire (110).

6. Système de distribution d'hydrogène continu (100) selon la revendication 5, dans lequel le dispositif de commande (112) est configuré pour déconnecter la pluralité desdits réservoirs de carburant à hydrogène primaires (102) du consommateur de carburant primaire (104) en commandant l'ouverture de la première vanne (108).

7. Système de distribution d'hydrogène continu (100) selon l'une quelconque des revendications 5 à 6, dans lequel le dispositif de commande (112) est en outre configuré pour transmettre (600) une commande au consommateur de carburant primaire (104) pour réduire un prélèvement de carburant à hydrogène pendant le ravitaillement de la pluralité de réservoirs de carburant à hydrogène primaires (102).

8. Système de distribution d'hydrogène continu (100) selon l'une quelconque des revendications 6 à 8, dans lequel le dispositif de commande (112) est configuré pour maintenir la connexion de l'au moins un réservoir de carburant à hydrogène secondaire (106) à un parmi le consommateur de carburant primaire (104) et le consommateur de carburant secondaire (110) en maintenant la connexion de l'au moins un réservoir de carburant à hydrogène secondaire (106) au consommateur de carburant secondaire (110).

9. Procédé dans un système de distribution d'hydrogène continu ayant une pluralité de réservoirs de carburant à hydrogène primaires et au moins un réservoir de carburant à hydrogène secondaire pour maintenir la disponibilité de l'hydrogène pour un consommateur de carburant primaire pendant le ravitaillement d'au moins une parmi la pluralité de réservoirs de carburant à hydrogène primaires, le procédé étant effectué par un dispositif de commande et comprenant :
la détermination (901) si la pluralité de réservoirs de carburant à hydrogène primaires est configurée pour le ravitaillement ;
en réponse à la détermination (903) que la pluralité de réservoirs de carburant à hydrogène primaires est configurée pour le ravitaillement :
avant que le processus de ravitaillement ne commence :
la déconnexion (905) de la pluralité de réservoirs de carburant à hydrogène primaires du consommateur de carburant primaire ; et
la connexion (907) de l'au moins un réservoir de carburant à hydrogène secondaire au consommateur de carburant primaire, maintenant ainsi la disponibilité de l'hydrogène pour le consommateur de carburant primaire pendant le ravitaillement de la pluralité de réservoirs de carburant à hydrogène primaires ; et
après que la pluralité desdits réservoirs d'hydrogène primaires a été ravitaillée (909) :
la connexion (911) de la pluralité de réservoirs de carburant à hydrogène primaires au consommateur de carburant primaire.

10. Procédé selon la revendication 9, comprenant en outre la déconnexion (913) de l'au moins un réservoir de carburant à hydrogène secondaire à partir du consommateur de carburant primaire après que la pluralité desdits réservoirs d'hydrogène primaires a été ravitaillée.

11. Procédé selon l'une quelconque des revendications 9 à 10, dans lequel le consommateur de carburant primaire comprend un véhicule électrique à pile à combustible.

12. Procédé selon l'une quelconque des revendications 9 à 11, comprenant en outre :
la connexion (1201) de l'au moins un réservoir de carburant à hydrogène secondaire à un consommateur de carburant secondaire pendant un fonctionnement normal ;
la déconnexion (1203) de l'au moins un réservoir de carburant à hydrogène secondaire du consommateur de carburant secondaire avant que le processus de ravitaillement ne commence ; et
la connexion (1205) de l'au moins un réservoir de carburant à hydrogène secondaire au consommateur de carburant secondaire après que la pluralité de réservoirs d'hydrogène primaires a été ravitaillée.

13. Procédé selon l'une quelconque des revendications 9 à 12, comprenant en outre :
la connexion (1301) de l'au moins un réservoir de carburant à hydrogène secondaire à un consommateur de carburant secondaire pendant un fonctionnement normal ; et
le maintien (1303) de la connexion au consommateur de carburant secondaire lorsque l'au moins un réservoir de carburant à hydrogène secondaire est connecté au consommateur de carburant primaire.

14. Procédé selon l'une quelconque des revendications 9 à 13, dans lequel le consommateur de carburant secondaire comprend un réchauffeur catalytique à hydrogène.

15. Procédé selon l'une quelconque des revendications 9 à 14, comprenant en outre
la réduction (1401) d'un niveau de puissance du consommateur de carburant primaire pendant le processus de ravitaillement pour réduire la consommation de carburant pendant le processus de ravitaillement.
